# EUROPEAN PATENT APPLICATION

(11) **EP 1 659 307 A2**
(43) Date of publication of application: **24.05.2006**
(21) Application number: 05077631.9
(22) Date of filing: 18.11.2005
(51) Int. Cl.: F16D 27/112

(54) **Device for transmitting the rotating movement to a driven shaft, in particular for fluid recirculating pumps**

(30) Priority: 22.11.2004 IT MI20042264
(71) Applicant: Baruffaldi S.p.A., San Donato Milanese, Milan (IT)
(72) Inventor: Boffelli, Piercarlo, Milano (IT); Bellotti, Claudio, Cerro al Lambro (MI) (IT); Depoli, Erminio, Crema (CR) (IT); Natale, Fabio, San Donato Milanese (MI) (IT)
(74) Representative: Raimondi, Margherita

(57) **Abstract**

Device for transmitting a rotating movement from movement generating means (21) to a driven shaft (2), comprising at least one friction coupling (20) arranged between said movement generating means (21) and the driven shaft (2) and formed by at least one fixed electromagnet (22) and by at least one armature (23;123) movable in the axial direction, said armature (23;123) being arranged between the rotor (21) and the electromagnet (22) and having means (23a;123a) for engagement with corresponding elements (25a;125a) of a bell member (25;125) integral with the driven shaft (2), there being envisaged axially thrusting resilient means (24) arranged between the bell member (25;125) and the armature (23;123).

## Description

The present invention relates to a device for controlling the means for recirculating an engine cooling fluid, in particular for vehicles.

It is known in the sector relating to the production of engines, in particular internal-combustion engines, that there exists the need to cool said engines by recirculating a cooling fluid moved by means of a corresponding recirculating pump, the impeller of which is made to rotate by a shaft actuated by a pulley and by a belt connected to the driving shaft.

It is also known that recirculation of the cooling fluid must be performed at a rate corresponding to the actual cooling requirement determined by the real conditions of use and by the external temperature so as to avoid the constant and needless rotation, at full speed, of devices which draw useful power, increasing the wear of the various component parts and the consumption levels of the vehicle.

The technical problem which is posed, therefore, is that of providing a device for controlling the means for recirculating engine cooling fluids for vehicles and the like, which is able to produce the rotation / stoppage of the impeller of said recirculating means depending on the actual operating requirement of the engine.

In addition to this it is necessary to ensure that recirculation of the cooling fluid is also guaranteed in the case of a fault in the electric power supply system, ("fail-safe" mode).

Within the scope of this problem it is also required that this device should have small radial and axial dimensions, but at the same time should be able to produce high torques and/or a high number of revolutions also at a slower speed of rotation of the engine so as to be applicable also to high-performance pumps of heavy vehicles with low-revolution engines.

It is also required that the device should be easy and inexpensive to produce and assemble and should be able to be installed easily on the pump body without the need for special adaptation.

These results are obtained according to the present invention by a device for transmitting a rotating movement from movement generating means to a driven shaft, comprising at least one friction coupling arranged between said movement generating means and the driven shaft and formed by at least one fixed electromagnet and at least one armature movable in the axial direction, said armature being axially arranged between the rotor and the electromagnet and having means for engagement with corresponding elements of a bell member integral with the driven shaft, there being envisaged axially thrusting resilient means arranged between the bell member and the armature.

Further details may be obtained from the following description of a non-limiting example of embodiment of the subject of the present invention, provided with reference to the accompanying drawings, in which:
- Figure 1 shows a cross-section, along the plane indicated by I-I in Fig. 2, of the device according to the present invention;
- Figure 2 shows a cross-section along the plane indicated by II-II in Fig. 1;
- Figure 3 shows a schematic side view of engagement between bell member and armature of the coupling;
- Figure 4 shows a schematic partially sectioned view of a second embodiment of the device according to the present invention;
- Figure 5 shows a partially sectioned schematic view of a third embodiment of the device according to the present invention; and
- Figure 6 shows a partially sectioned schematic view of a fourth embodiment of the device according to the present invention.

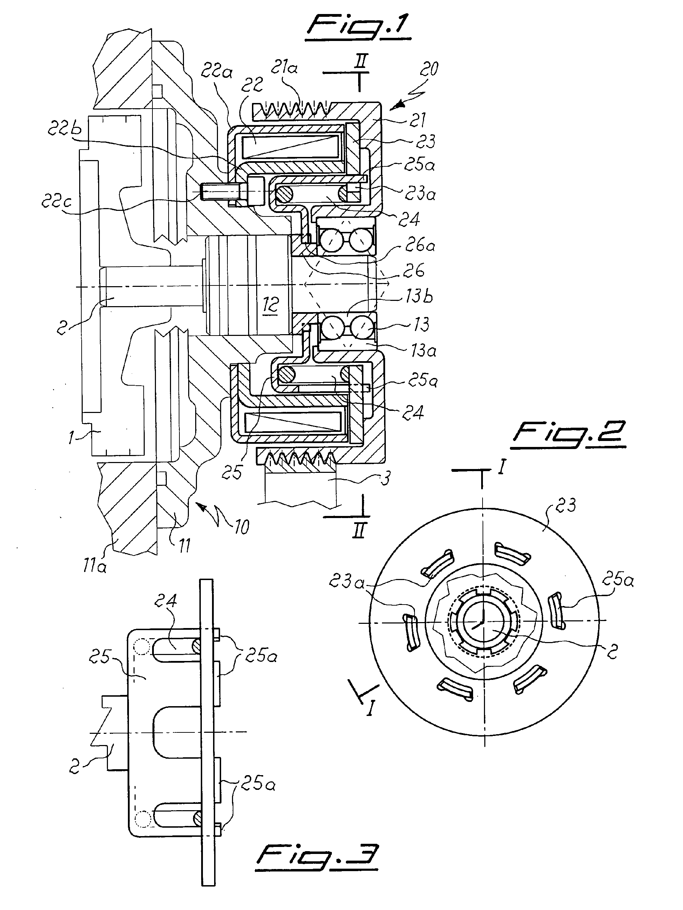

As shown in Fig. 1, the impeller 1 of a pump for recirculating the cooling fluid of vehicles and the like is mounted on a first end of a shaft 2 supported by a stationary assembly 10 comprising the body 11 of the pump fixed to the base 11a of the vehicle engine.

The pump body 11 has, arranged inside it, a first bearing 12 which supports the shaft 2 of the impeller 1; the shaft 2 has, keyed on it, the inner race 13a of a second bearing 13, the outer race 13b of which is integral with a suitably shaped circular plate 21 on the outer circumferential edge of which a pulley 21a is formed, said pulley being suitable for engagement with a belt 3 for transmission of the movement.

The circular plate 21 forms the rotor of an electromagnetic coupling 20 which comprises a fixed electromagnet 22 housed inside a corresponding seat of the rotor 21 and an armature 23, made of friction material, situated between the rotor 21 and the said electromagnet 22.

The armature 23 has circumferentially arranged eyelets 23a inside which the ends of axial reliefs 25a of a bell member 25 mounted on the shaft 2 by means of a respective hub 26 may be inserted.

A spring 24 able to exert a thrusting action in the axial direction on the said armature is arranged between the bottom of the bell member 25 and the armature 23.

With this coupling system the armature 23 is able to perform movements in the axial direction towards/away from the rotor 21, but is locked as regards relative rotation with respect to the bell member 25.

The pump actuating device operates in the following manner:
- when the electromagnet 22 is de-energized, the armature 23 is pushed by the spring 24 towards the rotor 21 with which it engages axially, transmitting the movement of the rotor 21 to the driven shaft 2 which therefore rotates at the same speed as the pulley 21a together with the impeller 1;
- when the electromagnet 22 is energized, an electromagnet field is generated and this field, overcoming the thrusting action of the spring 24, recalls the armature 23 which is separated from the rotor 21, causing stoppage of the impeller 1.

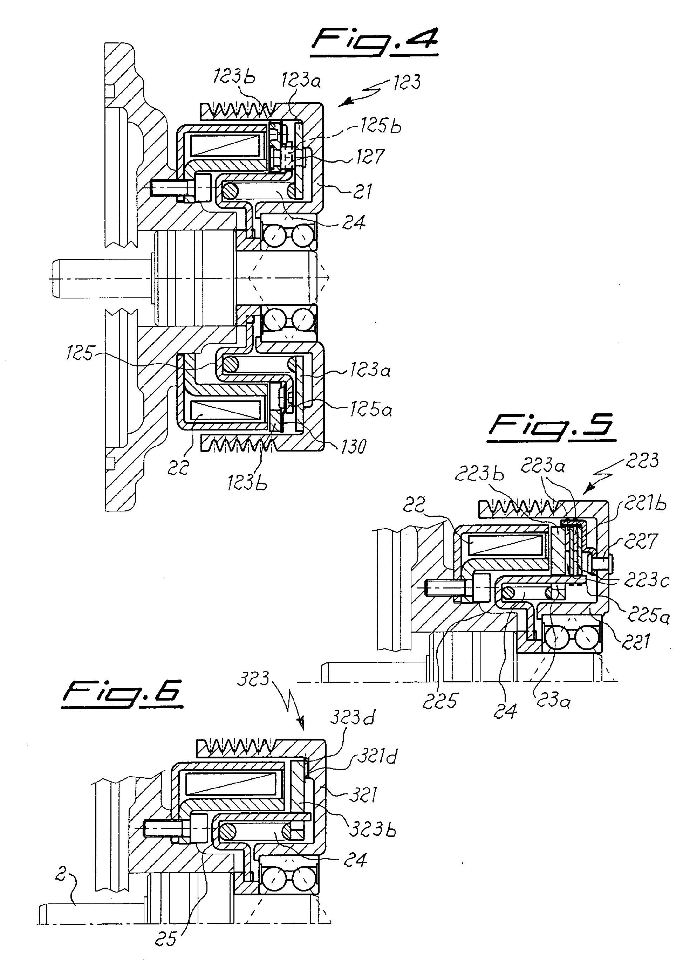

Fig. 4 shows a second embodiment of the device according to the present invention which, in this configuration, has an armature 123 divided into two parts, i.e. a part 123a for engagement with the rotor 21 and a part 123b for engagement with the electromagnet 22.

The two parts of the armature 123, i.e. rotor part 123a and magnet part 123b, are joined together in the axial direction by suitable fastening means 127 such as rivets, riveted joints and the like housed inside corresponding seats 125b of an annular edge 125a of the bell member 125.

The magnet part 123b of the armature 123 is also joined to the said annular edge 125a of the bell member 125 by means of a resilient membrane 130 able to allow movements of the armature in the axial direction, but prevent relative rotation thereof with respect to the bell member. In this way:
- when the electromagnet 22 is de-energized, the membrane 130 keeps the magnet part 123b of the armature 123 separated from the electromagnet 22, while the spring 24 pushes against the rotor part 123a of the armature, causing engagement of the latter with the rotor 21 and therefore rotation of the impeller 1 at full speed;
- when the electromagnet 22 is energized, an electromagnet field is generated and this field, overcoming the recalling action of the membrane 130, attracts the magnet part 123b of the armature towards the magnet 22 with which it engages; the displacement, in the axial direction, of the magnet part 123b of the armature also produces the movement, via the riveted joints 127, of the rotor part 123a of the said armature which, being separated from the rotor 21, causes an interruption in the transmission of the movement and therefore stoppage of the impeller 1.

It can therefore be seen how with the device according to the invention it is possible to maintain large dimensions of the magnet 22 which is therefore able to overcome high thrusting forces of the springs 24 which may, in turn, have dimensions such as to obtain high rotor/armature transmission torques.

According to a preferred embodiment it is envisaged moreover that the hub 26 supporting the bell member 25 should have seats inside which the lugs of the bell member 25 pushed axially on the hub are inserted.

Fig. 5 shows a third example of embodiment of the device according to the invention in which the armature 223 is divided into a magnet part 223b while the rotor part consists of a first set of friction disks 223a - integral with a flange 221b fastened to the rotor 221 by means of a riveted joint 227 - alternating with a second set of disks 223c integral with the axial extensions 225a of the bell member 225.

With this multiple-disk solution it is possible to increase the axial-contact friction surface area of the armature, allowing a reduction in the thrusting load of the spring 24 and therefore the dimensions of the magnet 22 with advantages also as regards the overall volume of the assembly.

Fig. 6 shows a fourth embodiment in which the armature 323 has a set of front teeth 323d able to engage with a corresponding set of front teeth 321d of the rotor 321.

As shown, it is envisaged, moreover, that the electromagnet 22 is realized by means of plates 22a, 22b folded so as to form the seat of the electric winding and fastened to the pump body by screw means 22c; the permanent magnet 60 is axially inserted between the two folded plates 22a,22b, thus resulting in a light and low-cost design of the said electromagnet.

## Claims

1. Device for transmitting a rotating movement from movement generating means (21;321) to a driven shaft (2), comprising at least one friction coupling (20) arranged between said movement generating means (21;321) and the driven shaft (2) and formed by at least one fixed electromagnet (22) and by at least one armature (23;123;223;323) movable in the axial direction, **characterized in that** said armature (23;123;223;323) is axially arranged between the rotor (21) and the electromagnet (22) and has means (23a;123a) for engagement with corresponding elements (25a;125a;225a) of a bell member (25;125;225) integral with the driven shaft (2), there being envisaged axially thrusting resilient means (24) arranged between the bell member (25;125;225) and the armature (23;123;223;323).

2. Device according to Claim 1, **characterized in that** said movement generating means consist of a suitably shaped circular plate (21;321) on the outer circumferential edge of which a pulley (21a) is formed, said pulley being suitable for engagement with a corresponding drive belt (3).

3. Device according to Claim 1, **characterized in that** said circular plate (21;321) for generating the movement is mounted on a bearing (13) keyed on the driven shaft (2).

4. Device according to Claim 1, **characterized in that** said bell member (25;125;225;325) is mounted on the shaft (2) by means of a respective hub (26).

5. Device according to Claim 4, **characterized in that** said bell member (25;125;225;325) is joined to the hub (26) by means of projections inserted in corresponding seats (26a) of the hub.

6. Device according to Claim 1, **characterized in that** the means for engagement of said armature (23) with the bell member (25;225) envisage at least one annular seat (23a) arranged on a suitable diameter of the said armature.

7. Device according to Claim 6, **characterized in that** said elements of the bell member (25;225) suitable for engagement with the armature (23) consist of at least one relief (25a;225a) extending in the axial direction.

8. Device according to Claim 10, **characterized in that** said bell member (25;225) has as many axial reliefs (25a;225a) as there are annular seats (23a) on the armature (23).

9. Device according to Claim 1, **characterized in that** said armature (123) is divided into two parts, i.e. a rotor part (123a;223a) and magnet part (123b;223b), for engagement with the rotor (21;221) and with the electromagnet (22), respectively.

10. Device according to Claim 9, **characterized in that** said two parts (123a,123b) of the armature (123) are joined together in the axial direction by means of suitable fastening means (127).

11. Device according to Claim 9, **characterized in that** said bell member (125) has a front annular edge (125a) provided with through-openings (125b) in the axial direction.

12. Device according to Claim 11, **characterized in that** said means (127) for fastening together the two parts (123a,123b) of the armature (123) to the bell member (125) are housed inside said axial openings (125b) in the edge (125a) of the bell member (125) and movable axially with respect thereto.

13. Device according to Claim 11, **characterized in that** the magnet part (123b) of the armature (123) is joined to the annular edge (125a) of the bell member (125) by means of a resilient membrane (130).

14. Device according to Claim 9, **characterized in that** the armature (223) comprises a magnet part (223b) and a rotor part (223a,22c) comprising a first set of friction disks (223a) integral with the rotor (221) and alternating with a second set of disks (223c) integral with the axial extensions (225a) of the bell member (225).

15. Device according to Claim 14, **characterized in that** said first set of friction disks (223a) is integral with a second bell member (221b) fastened to the rotor (221).

16. Device according to Claim 1, **characterized in that** the armature (323) has a set of front teeth (323d) suitable for engagement with a corresponding set of front teeth (321d) of the rotor (321).

17. Device according to Claim 1, **characterized in that** said electromagnet (22) is realized by means of plates (22a,22b) folded so as to form the seat of the electric winding, one of the said plates being fastened to the pump body (11) by screw means (22c).

18. Device according to Claim 17, **characterized in that** a permanent magnet (60) is arranged between said two folded plates (22a,22b).

19. Device according to Claim 1, **characterized in that** said driven shaft (2) is the shaft actuating the impeller (1) of a recirculating pump.

20. Device according to Claim 19, **characterized in that** said recirculating pump is the pump for the cooling fluid of a vehicle.

21. Pump for recirculating a cooling fluid, comprising a device for transmitting a rotating movement from movement generating means (21;321) to a driven shaft (2), said device comprising at least one friction coupling (20) arranged between said movement generating means (21;321) and the driven shaft (2) and formed by at least one fixed electromagnet (22) and by at least one armature (23;123;223;323) movable in the axial direction, **characterized in that** said armature (23;123;223;323) is axially arranged between the rotor (21) and the electromagnet (22) and has means (23a;123a) for engagement with corresponding elements (25a;125a;225a) of a bell member (25;125;225) integral with the driven shaft (2), there being envisaged axially thrusting resilient means (24) arranged between the bell member (25;125;225) and the armature (23;123;223;323).
